# EUROPÄISCHE PATENTSCHRIFT

(11) **EP 3 699 058 B1**
(45) Veröffentlichungstag und Bekanntmachung des Hinweises auf die Patenterteilung: **29.05.2024**
(21) Anmeldenummer: 19158580.1
(22) Anmeldetag: 21.02.2019
(51) Int. Cl.: B61D 3/18, B61D 3/20, B61D 47/00

(54) **ANORDNUNG AUS SCHIENENFAHRZEUG UND TRAGVORRICHTUNG**
ASSEMBLY OF A RAIL VEHICLE AND CARRYING DEVICE
AGENCEMENT D'UN VÉHICULE FERROVIAIRE ET DISPOSITIF SUPPORT

(43) Veröffentlichungstag der Anmeldung: 26.08.2020
(73) Patentinhaber: Kässbohrer Transport Technik GmbH, 5301 Eugendorf (AT); Blum, Franz, 5020 Salzburg (AT)
(72) Erfinder: BLUM, Franz, 5020 Salzburg (AT); FÖSSL, Horst, 5061 Elsbethen (AT)
(74) Vertreter: Torggler & Hofmann Patentanwälte - Innsbruck

(56) Entgegenhaltungen:
- EP-A1- 0 576 852
- EP-A1- 2 902 299
- WO-A1-2013/111068
- WO-A1-2016/141399
- FR-A1- 3 068 325
- RU-U1- 185 241

## Beschreibung

Die Erfindung betrifft eine Anordnung aus einem Schienenfahrzeug in Form eines Taschenwagens und zumindest einer hebbaren Tragvorrichtung mit den Merkmalen des Oberbegriffs des Anspruchs 1 und ein Verfahren zum Beladen eines Schienenfahrzeugs unter Verwendung wenigstens einer Tragvorrichtung gemäß einer solchen Anordnung.

Im Stand der Technik sind im Zusammenhang mit dem Beladen eines Schienenfahrzeuges mit Ladegut durch eine Hubvorrichtung grundsätzlich Ladegüter in Form von unmittelbar kranbarem Ladegut und nicht unmittelbar kranbaren Ladegut bekannt.

Unmittelbar kranbares Ladegut bezieht sich auf ein Ladegut, welches selbst Greifkanten für eine Hubvorrichtung aufweist, also im Wesentlichen ohne weitere Hilfsmittel von einer Hubvorrichtung verladen werden kann. Als Beispiel für ein unmittelbar kranbares Ladegut kann ein kranbarer Sattelauflieger genannt werden.

Nicht unmittelbar kranbares Ladegut bezieht sich auf ein Ladegut, welches selbst keinerlei Greifkanten für eine Hubvorrichtung aufweist. Solches Ladegut wird oft mittels einer hebbaren Tragvorrichtung verladen, wobei die hebbare Tragvorrichtung Greifkanten für eine Hubvorrichtung aufweisen. Durch eine solche Hubvorrichtung kann also nicht unmittelbar kranbares Ladegut kranbar gemacht werden. Als Beispiel für ein nicht unmittelbar kranbares Ladegut kann ein gewöhnlicher Sattelauflieger oder beispielsweise ein Pkw genannt werden.

Im Stand der Technik bekannte Anordnungen aus einem Schienenfahrzeug in Form eines Taschenwagens und einer hebbaren Tragvorrichtung sind - ohne aufwändige bauliche Änderungen wie etwa zusätzliche, verschwenkbare Plateaus zur Abstützung - auf das Beladen der Tasche eines Schienenfahrzeugs mit nicht unmittelbar kranbarem Ladegut mittels der Tragvorrichtung und Leertransporte beschränkt. Bei einem Leertransport wird die Tasche des Schienenfahrzeugs lediglich mit einer Tragvorrichtung ohne Ladegut beladen. Im Stand der Technik bekannte Anordnungen stellen somit einschränkende Anforderungen an das zu verladende Ladegut. Durch eine so eingeschränkte Eignung von im Stand der Technik bekannten Anordnungen werden erhöhte Anforderungen an die Transportlogistik gestellt, da Leertransporte aus wirtschaftlichen Gründen zu vermeiden sind.

Eine gattungsgemäße Anordnung aus einem Schienenfahrzeug und einer Tragvorrichtung geht beispielsweise aus der WO 2016/141399 A1 hervor.

Aus der RU 185 241 U1 ist eine Anordnung aus einem Taschenwagen und einem in die Tasche des Taschenwagens einsetzbaren, mit einem Fahrzeug beladbaren Korb bekannt.

Aufgabe der Erfindung ist die Bereitstellung einer gattungsgemäßen Anordnung aus einem Schienenfahrzeug und einer Tragvorrichtung, bei welchen die oben diskutierten Probleme vermieden werden und sich insbesondere eine breitere Eignung für unterschiedliche Beladungssituationen ergibt.

Diese Aufgabe wird durch eine Anordnung aus einem Schienenfahrzeug in Form eines Taschenwagens und zumindest einer hebbaren Tragvorrichtung mit den Merkmalen des Oberbegriffs des Anspruchs 1 gelöst. Vorteilhafte Ausführungsformen der Erfindung sind in den abhängigen Ansprüchen definiert. Wie der zuvor diskutierte Stand der Technik weist die erfindungsgemäße Anordnung zunächst ein Schienenfahrzeug in Form eines Taschenwagens und zumindest eine hebbaren Tragvorrichtung für das Beladen des Schienenfahrzeuges mit wenigstens einem Fahrzeug durch eine Hubvorrichtung auf. Bei der Hubvorrichtung handelt es sich in der Regel um einen Verladekran.

Es ist weiter vorgesehen, dass der Taschenwagen (engl. "pocket wagon", franz. "wagon kangourou') eine Tasche und zwischen zwei Stellungen bewegbar am Taschenwagen angeordnete Fixiermittel aufweist.

Die hebbare Tragvorrichtung weist einen Tragrahmen mit zumindest zwei miteinander verbundenen, zumindest abschnittsweise eine gewisse Höhenerstreckung aufweisenden Längsträger auf, wobei der Tragrahmen eine sich mit einer gewissen Länge entlang der zumindest zwei Längsträgern erstreckende, zwischen diesen verlaufende, befahrbare Abstützung für das Ladegut aufweist. Die zumindest zwei Längsträger weisen jeweils wenigstens zwei Greifkanten (allgemein Anhebepunkte) für die Hubvorrichtung auf. Auch weist die hebbare Tragvorrichtung Aufstandsflächen zum unmittelbaren Aufstellen der Tragvorrichtung auf einem Terminalflur auf.

Im Unterschied zum Stand der Technik ist bei einer erfindungsgemäßen Anordnung zumindest eine Tragvorrichtung über die gesamte Länge der befahrbaren Abstützung innerhalb der Tasche des Taschenwagens anordenbar und die zumindest zwei Längsträger weisen jeweils abschnittsweise eine solche gegenüber der Höhenerstreckung verringerte Höhe auf, dass die am Schienenfahrzeug angeordneten Fixiermittel im Bereich oberhalb der zumindest zwei Längsträger anordenbar sind.

Dadurch kann es ermöglicht werden, dass das Schienenfahrzeug unabhängig vom Beladungszustand der Tasche auch außerhalb der Tasche mit Ladegut und/oder einer oder mehreren gegebenenfalls beladenen Tragvorrichtung(en) beladen werden kann. Die außerhalb der Tasche auf dem Schienenfahrzeug geladenen Ladegüter oder Tragvorrichtung(en) können (zumindest teilweise) auf den besagten Fixiermitteln abgestützt und fixiert werden. Eine Belastung einer gegebenenfalls in der Tasche vorhandenen Tragvorrichtung kann dadurch vermieden werden.

Bei einer Anordnung der Tragvorrichtung in der Tasche des Taschenwagens kann sich die Abstützung zumindest teilweise unterhalb einer Oberkante der Tasche des Taschenwagens befinden. Auch der Tragrahmen - insbesondere dessen zumindest zwei Längsträger - können sich bei der in der Tasche angeordneten Tragvorrichtung größtenteils unterhalb der Oberkante befinden. Die Greifkanten befinden sich jedoch oberhalb der Oberkante, anderenfalls kann die Tragvorrichtung nicht in der Tasche abgestellt werden.

Es kann vorgesehen sein, dass bei der in der Tasche angeordneten Tragvorrichtung die Höhenerstreckung H der Längsträger abschnittsweise über die Oberkante der Tasche des Taschenwagens hinausragt. In anderen Worten gesagt, kann abschnittsweise die Höhenerstreckung H der Längsträger größer sein, als die Tiefe der Tasche des Taschenwagens.

Die Höhe (von der befahrbaren Abstützung aus gesehen) der Abschnitte mit der gegenüber der Höhenerstreckung H verringerten Höhe kann bei der in der Tasche angeordneten Tragvorrichtung im Wesentlichen der Höhe der Oberkante der Tasche des Taschenwagens entsprechen. In anderen Worten gesagt kann die Höhe der Abschnitte mit der gegenüber der Höhenerstreckung H verringerten Höhe im Wesentlichen der Tiefe der Tasche des Taschenwagens entsprechen.

Die Höhe (von der befahrbaren Abstützung aus gesehen) der Abschnitte mit der gegenüber der Höhenerstreckung H verringerten Höhe kann bei der in der Tasche angeordneten Tragvorrichtung gleich groß oder geringer sein, als die Höhe der Oberkante der Tasche des Taschenwagens im Bereich der Fixiermittel.

Durch die Anordnung der am Schienenfahrzeug angeordneten Fixiermittel im Bereich oberhalb der zumindest zwei Längsträger kann sich vorteilhaft eine niedrige Ladekante für auf den Fixiermitteln angeordnetes Ladegut oder eine darauf angeordnete weitere Tragvorrichtung ergeben.

Dadurch, dass die Längsträger der Tragvorrichtung eine variierende Höhenerstreckung (also Abschnitte mit unterschiedlicher Höhenerstreckung) aufweisen, kann die Wandstärke der Längsträger so gering wie möglich gehalten werden, um den zwischen den Längsträgern bestehenden Innenraum (lichte Weite) bestmöglich nutzen zu können. Bei einer Fertigung der Tragvorrichtung aus Stahl können durch die variable Höhenerstreckung auch wirtschaftlich vorteilhaft geringere Anforderungen an die Festigkeit des verwendeten Stahls gestellt werden.

Es kann vorteilhaft sein, wenn die am Schienenfahrzeug angeordneten Fixiermittel im Bereich der Tasche des Taschenwagens angeordnet sind. Es soll nicht ausgeschlossen sein, dass das Schienenfahrzeug auch in Bereichen außerhalb der Tasche, beispielsweise in Bereichen der Stirnseiten des Schienenfahrzeugs, Fixiermittel aufweist.

Es ist vorgesehen, dass die Längsträger in den Abschnitten mit verringerter Höhe an der Oberseite zumindest zwei Ausnehmungen aufweisen. Durch das Vorsehen von Ausnehmungen können Bereiche mit von der größten Höhenerstreckung der Längsträger abweichender Höhe geschaffen werden.

Erfindungsgemäß sind wenigstens zwei, an der Unterseite des Tragrahmens angeordnete Aufnahmeöffnungen für Fixiermittel zum Fixieren der Tragvorrichtung am Schienenfahrzeug vorgesehen. Die Aufnahmeöffnungen können zum Fixieren der Tragvorrichtung an oberhalb und außerhalb der Tasche des Taschenwagens angeordneten Fixiermitteln vorgesehen sein. Bevorzugt sind die Aufnahmeöffnungen zur Aufnahme von ISO-Zapfen ausgebildet. Die Aufnahmeöffnungen sind in der befahrbaren Abstützung ausgebildet, beispielsweise als Durchbrüche in der befahrbaren Abstützung.

Es kann vorteilhaft sein, wenn die Länge der befahrbaren Abstützung im Wesentlichen der Länge der Längsträger entspricht. Zum Beispiel falls vorgesehen sein, dass die befahrbare Abstützung jeweils stirnseitig an der Tragvorrichtung bündig mit den Längsträgern abschließt. Dadurch kann die Länge der befahrbaren Abstützung maximiert werden, wodurch sich eine hohe Variabilität für die Abstützung von einem Fahrzeug (beispielsweise für die Abstützposition von Stützfüßen des Fahrzeugs) ergeben kann. Vorzugsweise ist die Länge der befahrbaren Abstützung geringer als die Längserstreckung der Tasche des Taschenwagens. Besonders bevorzugt entspricht die Länge der befahrbaren Abstützung mehr als der Hälfte (50%) der Längserstreckung der Tasche und weniger als 3/4 (75%) der Längserstreckung der Tasche des Taschenwagens.

Es kann vorteilhaft sein, wenn die wenigstens zwei Greifkanten für die Hubvorrichtung zumindest zum Teil an den Längsträgern ausgebildet sind und/oder zumindest zum Teil lösbar an dem jeweiligen Längsträger angeordnet sind.

Durch eine gegebenenfalls teilweise Ausbildung der Greifkanten an den Längsträgern können diese konstruktiv einfach bereitgestellt werden.

Durch eine gegebenenfalls teilweise lösbar an dem jeweiligen Längsträger erfolgende Anordnung kann die Höhe des jeweiligen Längsträgers im Bereich der Greifkanten verringert werden. Dadurch kann eine Greifkante eines auf der Tragvorrichtung abgestellten Fahrzeugs für die Hubvorrichtung erreichbar gemacht werden.

Bei kranbaren Fahrzeugen, speziell beispielsweise bei kranbaren Sattelaufliegern (auch kranbare Trailer genannt), ist es in der Praxis so, dass die Greifkanten üblicherweise in einer gewissen, oftmals vorgegebenen oder gar normierten Höhenlage gegenüber der Fahrbahn, auf welcher der Sattelauflieger aufsteht, angeordnet sind. Die Tiefe einer Tasche eines Taschenwagens ist nun einerseits so gewählt, dass das kranbare Ladegut in der Tasche abgesetzt werden kann, ohne dass die Greifer der verwendeten Hubvorrichtung mit der Tasche kollidieren. Andererseits muss auch darauf geachtet werden, dass kranbaren Ladegut möglichst tief in der Tasche des Schienenfahrzeugs sitzt, um den Schwerpunktslage des Taschenwagens und des Ladeguts niedrig zu halten. Für die Positionierung der Greifkanten an der Tragvorrichtung können analoge Voraussetzungen gegeben sein.

Es kann somit vorkommen, dass sich die Greifkanten eines in der Tasche angeordneten, kranbaren Fahrzeugs an der im Wesentlichen gleichen Höhen- und Längsposition relativ zum Taschenwagen befinden, wie die Greifkanten einer in der Tasche angeordneten Tragvorrichtung.

Soll nun ein kranbares Fahrzeug gemeinsam mit der hebbaren Tragvorrichtung gemeinsam in der Tasche eines Taschenwagens angeordnet werden, kann durch die lösbare Anordnung der Greifkanten der Tragvorrichtung ermöglicht werden, dass das kranbare Ladegut durch einen Hubvorgang auf die bereits in der Tasche angeordnete Tragvorrichtung abgestellt werden kann. Dabei können die lösbaren Greifkanten von dem jeweiligen Längsträger der Tragvorrichtung gelöst werden und eine Kollision der Greifer der Hubvorrichtung mit den Greifkanten der Tragvorrichtung verhindert werden.

Andererseits kann so ermöglicht werden, dass ein gemeinsam mit der Tragvorrichtung in einer Tasche eines Taschenwagens angeordnetes, kranbares Fahrzeug, welches auf der Tragvorrichtung abgestellt ist, gesondert von der Tragvorrichtung aus der Tasche gehoben werden kann.

Für das Beispiel von kranbaren Sattelaufliegern kann es also ermöglicht werden, dass diese mit einer Hubvorrichtung auf eine bereits in einer Tasche eines Taschenwagens angeordnete Tragvorrichtung gehoben werden können. Auch kann es ermöglicht werden, dass ein kranbarer Sattelauflieger, welcher auf einer in einer Tasche eines Taschenwagens angeordneten Tragvorrichtung abgestellt ist, aus der Tasche gehoben werden kann, während die Tragvorrichtung im Taschenwagen verbleibt.

Die Tragvorrichtung kann sich dadurch für unterschiedlichste kranbare und nicht selbst kranbare Fahrzeuge eignen.

Es kann allgemein vorgesehen sein, dass die lösbaren Greifkanten seitlich zugänglich an den Längsträgern ausgebildet sind. Es kann also vorgesehen sein, dass die Greifkanten in einer Richtung quer zur Längserstreckung der Längsträger zugänglich sind.

Dabei kann von Vorteil sein, wenn die Greifkanten für die Hubvorrichtung jeweils zwischen zumindest einer Verwendungsposition und zumindest einer Verwahrposition bewegbar sind. Eine Verwendungsposition kann einer Position der jeweiligen Greifkanten entsprechen, in welcher die Greifer eine Hubvorrichtung an die Greifkanten für einen Hubvorgang angreifen können. Eine Verwahrposition kann einer Position der jeweiligen Greifkanten entsprechen, in welcher diese aus deren Verwendungsposition herausbewegt wurden. In der Verwahrposition können die Greifkanten derart positioniert sein, dass diese den Greifern einer Hubvorrichtung ein Erreichen eines auf der Tragvorrichtung abgestellten Fahrzeugs gestatten. Die Bewegbarkeit der Greifkanten kann vorzugsweise begrenzt sein. Besonders bevorzugt können die Greifkanten jeweils zwischen zumindest einer Verwendungsposition und zumindest einer Verwahrposition verschwenkbar sein.

Es kann vorteilhaft sein, wenn die befahrbare Abstützung für das Fahrzeug eine Kröpfung aufweist. Dadurch kann die Kontur der befahrbaren Abstützung einer Kontur des Taschenwagens folgen.

Dabei kann vorteilhaft sein, wenn die befahrbare Abstützung für das Fahrzeug in einem durch die Kröpfung geschaffenen Freiraum zumindest einen Anschlag für einen Querträger des Schienenfahrzeugs aufweist. Es kann sich dadurch beispielsweise eine Sicherung gegen einen unbeabsichtigten Längsversatz der in die Tasche eingesetzten Tragvorrichtung, etwa bei Bewegungen des Schienenfahrzeugs, ergeben. Ebenso kann sich dadurch die Positionierung der Tragvorrichtung in der Tasche des Taschenwagens beim Vorgang des Anordnens der Tragvorrichtung in der Tasche erleichtern lassen. Vorzugsweise ist der Anschlag in Form eines elastischen Puffers, beispielsweise eines Blocks aus elastischem Gummi, ausgebildet.

Es kann vorteilhaft sein, wenn der Tragrahmen zumindest eine Längsabstützung aufweist, über welche die Tragvorrichtung an Fixiermitteln des Schienenfahrzeugs abstützbar ist. Die zur Abstützung verwendeten Fixiermittel sind vorzugsweise stirnseitig am Schienenfahrzeug angeordnet. Es kann sich dadurch beispielsweise eine Sicherung gegen einen unbeabsichtigten Längsversatz der in die Tasche eingesetzten Tragvorrichtung, etwa bei Bewegungen des Schienenfahrzeugs, ergeben. Die Längsabstützung kann beispielsweise in Form von gegebenenfalls längenveränderbaren Stützarmen, welche einerseits mit der Tragvorrichtung und andererseits mit dem Schienenfahrzeug verbindbar sind, ausgebildet sein.

Es kann vorteilhaft sein, wenn zumindest eine weitere Tragvorrichtung oberhalb der Tasche an den Fixiermitteln des Taschenwagens fixierbar ist. Die weitere Tragvorrichtung kann dabei zumindest mit einem Teil ihrer Längserstreckung oberhalb der Tasche fixiert sein. Zum Fixieren der Tragvorrichtung können oberhalb und außerhalb - beispielsweise in Bereichen der Stirnseiten des Schienenfahrzeugs - der Tasche des Taschenwagens angeordnete Fixiermitteln vorgesehen sein.

Es kann vorteilhaft sein, wenn die zwischen zwei Stellungen bewegbar am Taschenwagen angeordneten Fixiermittel jeweils zwischen einer Verwendungsposition und einer Verwahrposition vorzugsweise begrenzt, bewegbar sind und besonders bevorzugt jeweils zwischen einer Verwendungsposition und einer Verwahrposition verschwenkbar sind. Vorzugsweise sind die Fixiermittel in der Verwendungsposition oberhalb der Tasche angeordnet und in der Verwahrposition im Wesentlichen vollständig außerhalb der Tasche angeordnet. Besonders bevorzugt sind die Fixiermittel Inder in der Verwahrposition jeweils an einer Außenseite des Taschenwagens angeordnet.

Es kann vorteilhaft sein, wenn die Längsträger zumindest abschnittsweise in den Abschnitten mit der Höhenerstreckung H zumindest ein Versteifungselement, beispielsweise einen Obergurt, aufweisen. Das zumindest eine Versteifungselement kann ein Durchbiegen oder Ausknicken der Tragvorrichtung während des Hebevorganges verhindern. Auch kann das zumindest eine Versteifungselement dazu beitragen, die Wandstärke der Längsträger so gering wie möglich zu halten.

Es kann vorteilhaft sein, wenn die Längsträger zumindest abschnittsweise in den Abschnitten mit der gegenüber der Höhenerstreckung H verringerten Höhe zumindest ein Versteifungselement, beispielsweise einen Obergurt, aufweisen. Es ist denkbar, dass die Greifkanten der Tragvorrichtung auf diesem zumindest einen Versteifungselement angeordnet sind. Sind die Greifkanten an einem lösbaren Bügel ausgebildet, kann der lösbare Bügel an diesem zumindest einen Versteifungselement angeordnet sein.

Es kann vorteilhaft sein, wenn die Längsträger zumindest abschnittsweise in den Abschnitten mit der gegenüber der Höhenerstreckung H verringerten Höhe zumindest ein Versteifungselement, beispielsweise einen Obergurt, aufweisen. Es ist denkbar, dass die Greifkanten der Tragvorrichtung auf diesem zumindest einen Versteifungselement angeordnet sind. Sind die Greifkanten an einem lösbaren Bügel ausgebildet, kann der lösbare Bügel an diesem zumindest einen Versteifungselement angeordnet sein.

Dabei kann jeweils vorteilhaft sein, wenn das zumindest eine Versteifungselement quer zu einer Längserstreckung der Längsträger und quer zur Höhenerstreckung der Längsträger ausgebildet ist. Das zumindest eine Versteifungselement kann beispielsweise an der Außenseite der Längsträger angeordnet sein, um die zur Verfügung stehende Breite zwischen den Längsträgern nicht zu beeinträchtigen. Vorzugsweise kann das Versteifungselement in Form von zumindest einem von den Längsträgern abstehenden Steg ausgebildet sein.

Wie eingangs bereits erwähnt wurde, wird auch Schutz für ein Verfahren zum Beladen eines Schienenfahrzeugs in Form eines Taschenwagens mit wenigstens einem Fahrzeug unter Verwendung wenigstens einer Tragvorrichtung gemäß einer wie zuvor beschriebenen begehrt.

Ein solches Verfahren weist zumindest die folgenden Schritte auf:
- Bereitstellen einer ersten und wenigstens einer zweiten Tragvorrichtung auf dem Terminalflur, wobei ggf. die erste und die wenigstens eine zweite Tragvorrichtung unabhängig voneinander auf dem Terminalflur aufstehen
- ggf. Beladen der ersten Tragvorrichtung vorzugsweise durch Auffahren des Fahrzeuges oder der Fahrzeuge
- Anheben und Verbringen der - ggf. beladenen - ersten Tragvorrichtung mit einer Hubvorrichtung über die Tasche des Schienenfahrzeugs in Form eines Taschenwagens, wobei die Hubvorrichtung für den Hebevorgang an den wenigstens zwei Greifkanten der Tragvorrichtung angreift
- Anordnen der - ggf. beladenen - ersten Tragvorrichtung über die gesamte Länge L_{A} der befahrbaren Abstützung der Tragvorrichtung innerhalb der Tasche
- Anordnen der am Schienenfahrzeug angeordneten Fixiermittel im Bereich oberhalb der zumindest zwei Längsträger der ersten Tragvorrichtung
- ggf. Beladen der wenigstens einen zweiten Tragvorrichtung vorzugsweise durch Auffahren des weiteren Fahrzeuges oder der weiteren Fahrzeuge
- Anheben und Verbringen der - ggf. beladenen - wenigstens einen zweiten Tragvorrichtung mit einer Hubvorrichtung über das Schienenfahrzeug in Form eines Taschenwagens, wobei die Hubvorrichtung für den Hebevorgang an den wenigstens zwei Greifkanten der Tragvorrichtung angreift
- Anordnen und Fixieren der - ggf. beladenen - wenigstens einen zweiten Tragvorrichtung oberhalb der Tasche an den im Bereich oberhalb der zumindest zwei Längsträger der ersten Tragvorrichtung angeordneten Fixiermitteln.

In einer Weiterbildung des Verfahrens können zumindest die folgenden weiteren Schritte vorgesehen sein:
- Bereitstellen wenigstens einer dritten Tragvorrichtung auf dem Terminalflur, wobei ggf. die erste und die zweite und die wenigstens eine dritte Tragvorrichtung unabhängig voneinander auf dem Terminalflur aufstehen
- ggf. Beladen der wenigstens einen dritten Tragvorrichtung vorzugsweise durch Auffahren eines weiteren Fahrzeuges oder der weiteren Fahrzeuge
- Anheben und Verbringen der - ggf. beladenen - wenigstens einen dritten Tragvorrichtung mit einer Hubvorrichtung über das Schienenfahrzeug in Form eines Taschenwagens, wobei die Hubvorrichtung für den Hebevorgang an den wenigstens zwei Greifkanten der Tragvorrichtung angreift
- Anordnen und Fixieren der - ggf. beladenen - wenigstens einen dritten Tragvorrichtung oberhalb der Tasche an den im Bereich oberhalb der zumindest zwei Längsträger der ersten Tragvorrichtung angeordneten Fixiermitteln zur Ausbildung eines Flachwagens
- ggf. Beladen der zweiten und der wenigstens einen dritten Tragvorrichtung
- falls diese nicht bereits beladen wurden - vorzugsweise durch Auffahren des Fahrzeuges oder der Fahrzeuge auf den Flachwagen.

Ausführungsbeispiele der Erfindung werden anhand der Figuren diskutiert. Es zeigen:
- Fig. 1a bis 1d: eine erste Ausführung einer Tragvorrichtung
- Fig. 2a bis 2d: einen Beladevorgang einer Anordnung mit einem Schienenfahrzeug und einer Tragvorrichtung gemäß der Ausführung der Figur 1
- Fig. 3a bis 3c: eine Seitenansicht und Detailansichten zu einer mit einem kranbaren Fahrzeug beladenen Anordnung mit einem Schienenfahrzeug und einer Tragvorrichtung gemäß der Ausführung der Figur 1
- Fig. 4a bis 4d: verschiedene Beladungszustände einer Anordnung mit einem Schienenfahrzeug und einer Tragvorrichtung gemäß der Ausführung der Figur 1
- Fig. 5a bis 5f: weitere unterschiedliche Beladungszustände einer Anordnung mit einem Schienenfahrzeug und einer Tragvorrichtung gemäß der Ausführung der Figur 1
- Fig. 6a und 6b: Detailansichten einer Anordnung mit einem Schienenfahrzeug und einer Tragvorrichtung gemäß der Ausführung der Figur 1
- Fig. 7a bis 7c: Detailansichten einer Tragvorrichtung gemäß der Ausführung der Figur 1
- Fig. 8a bis 8c: Detailansichten einer zweiten Ausführung einer Tragvorrichtung
- Fig. 9a bis 9c: Detailansichten einer dritten Ausführung einer Tragvorrichtung
- Fig. 10: eine Seitenansicht einer vierten Ausführung einer Tragvorrichtung
- Fig. 11: eine Ausführung einer Längsabstützung
- Fig. 12: eine Ansicht eines möglichen Beladungszustands einer Anordnung mit einem Schienenfahrzeug und einer Tragvorrichtung gemäß der Ausführung der Figur 1
- Fig. 13: eine perspektivische Ansicht von aufeinandergestapelten Tragvorrichtungen gemäß der Ausführung der Figur 1

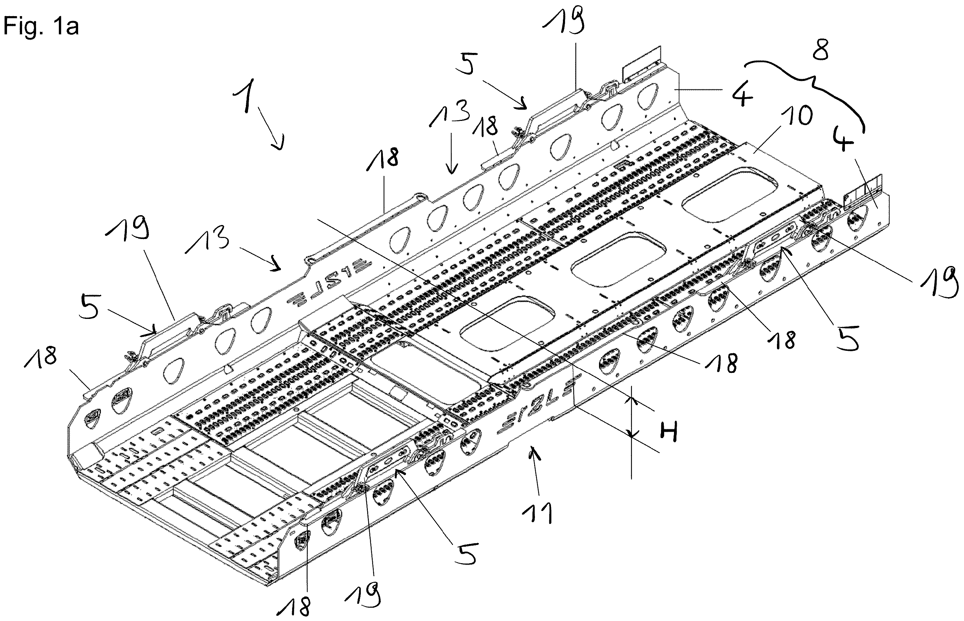

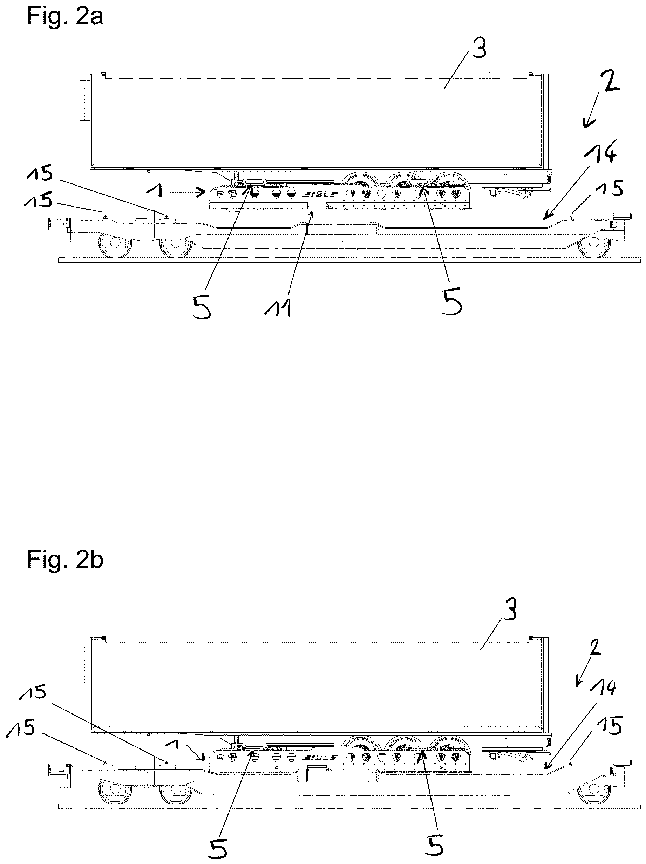

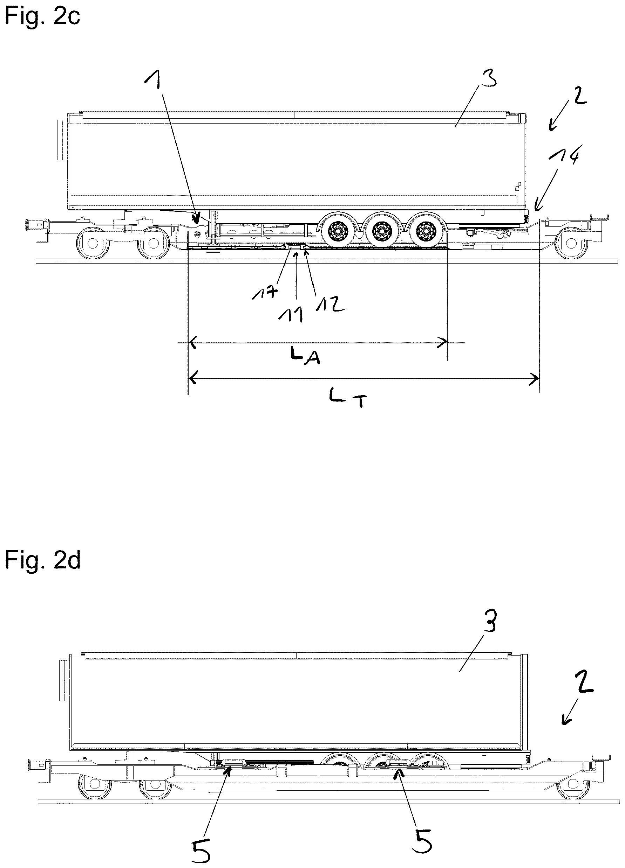

In den Figuren 1a bis 1d ist eine erste Ausführung einer Tragvorrichtung 1 gezeigt, wobei die Tragvorrichtung 1 wie dargestellt einen Tragrahmen 8 mit zwei Längsträgern 4 aufweist. Die Längsträger 4 sind miteinander verbunden und weisen abschnittsweise eine Höhenerstreckung H auf. Der Tragrahmen 8 weist weiter eine sich mit einer Länge L_{A} entlang der zwei Längsträger 4 erstreckende, zwischen diesen verlaufende, befahrbare Abstützung 10 für Fahrzeug 3 (siehe Figur 2) auf. Die zwei Längsträger 4 weisen in der gezeigten Ausführung jeweils zwei an Bügeln 19 ausgebildete Greifkanten 5 für eine Hubvorrichtung (nicht dargestellt) auf. Die Tragvorrichtung 1 kann mit deren an der Unterseite des Tragrahmens 8 angeordneten Aufstandsflächen 6 unmittelbar auf einem Terminalflur 7 aufgestellt werden.

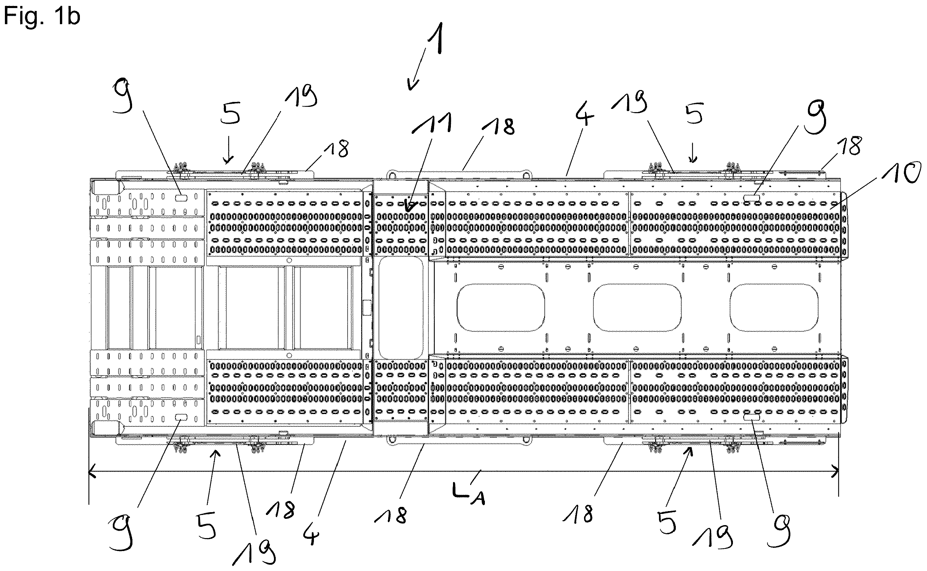

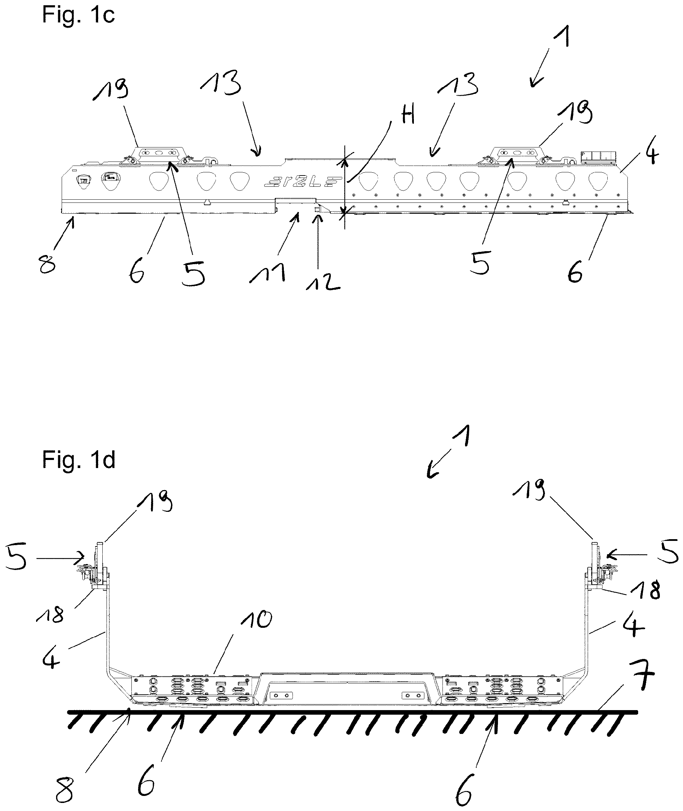

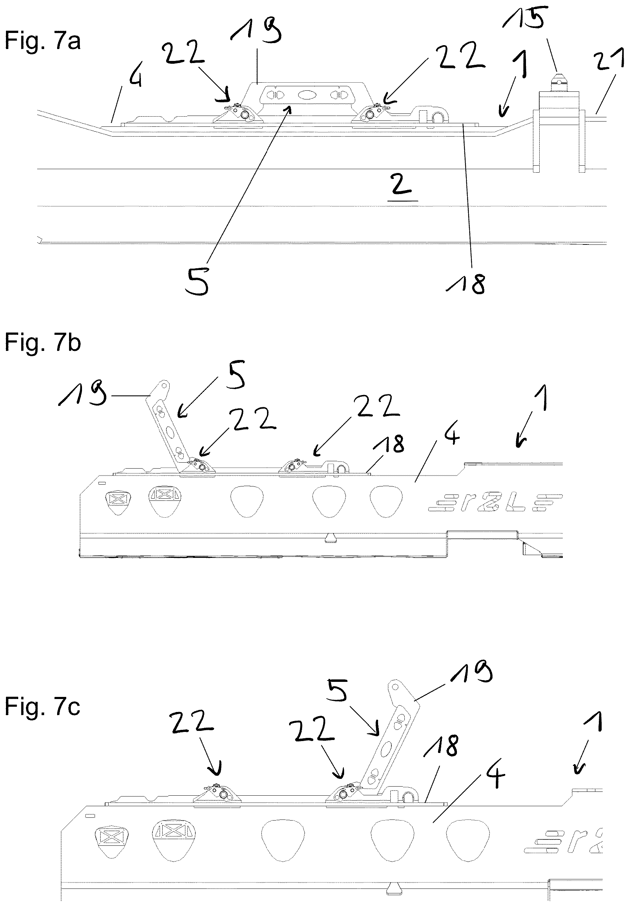

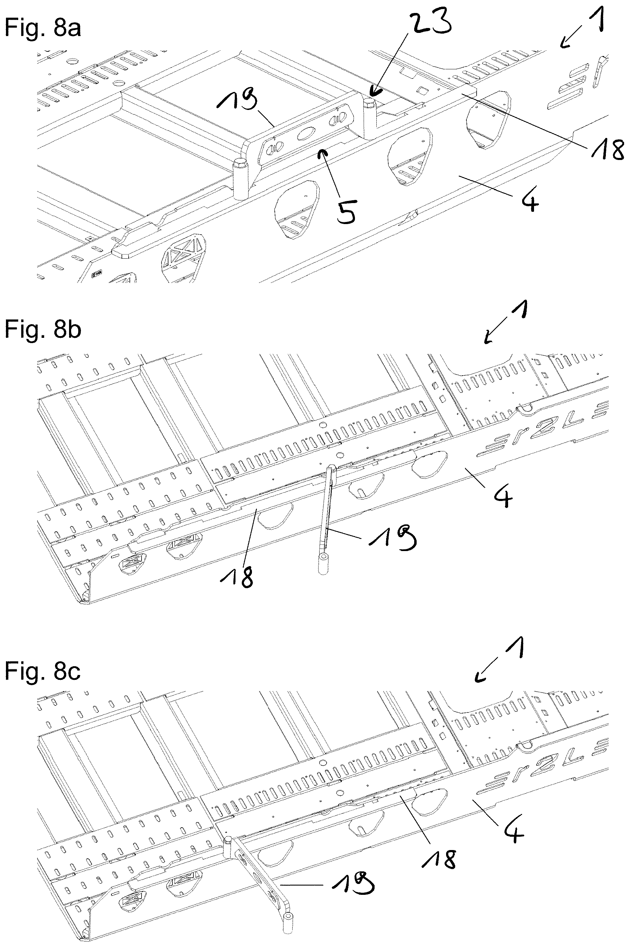

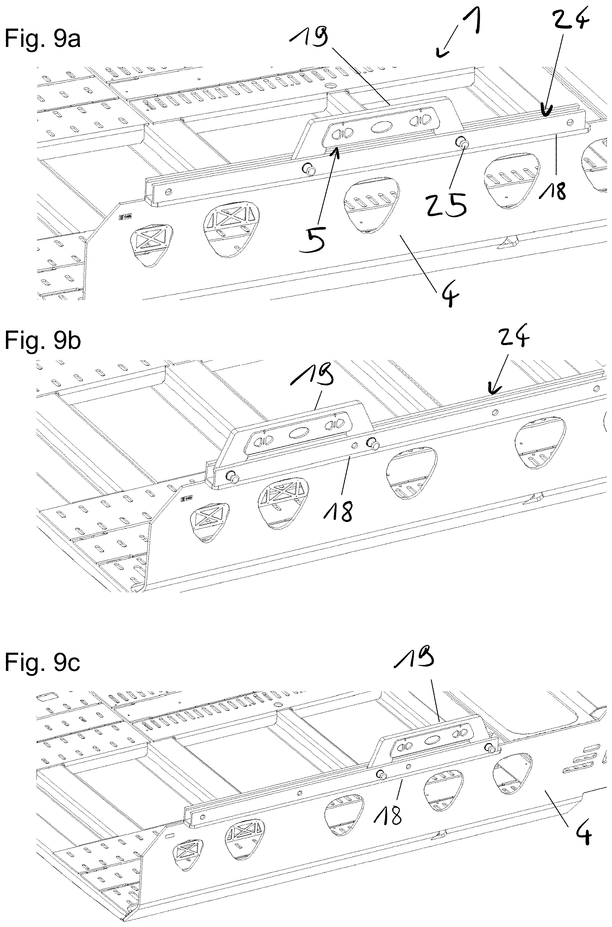

In der gezeigten Ausführung sind die Greifkanten 5, an welche eine Hubvorrichtung zum Anheben der Tragvorrichtung 1 angreifen kann, lösbar an dem jeweiligen Längsträger 4 angeordnet. Details zu den Greifkanten 5 der in Figur 1 gezeigten Tragvorrichtung 1 sind den Figuren 7a bis 7c zu entnehmen. Alternative Ausführungen von lösbaren Greifkanten 5 sind in den Figuren 8a bis 8c und 9a bis 9c gezeigt.

Wie der in Figur 1 gezeigten Ausführung weiter zu entnehmen ist, weisen die zwei Längsträger 4 jeweils abschnittsweise eine gegenüber der Höhenerstreckung H verringerte Höhe auf. In den Abschnitten mit verringerter Höhe sind an der Oberseite der Längsträger 4 jeweils zwei Ausnehmungen 13 vorgesehen.

Die Länge L_{A} der befahrbaren Abstützung 10 entspricht in der gezeigten Darstellung im Wesentlichen der Länge der Längsträger 4. Dies muss jedoch nicht so sein. Es ist auch denkbar, dass die Länge der befahrbaren Abstützung 10 von der Länge der Längsträger 4 abweicht.

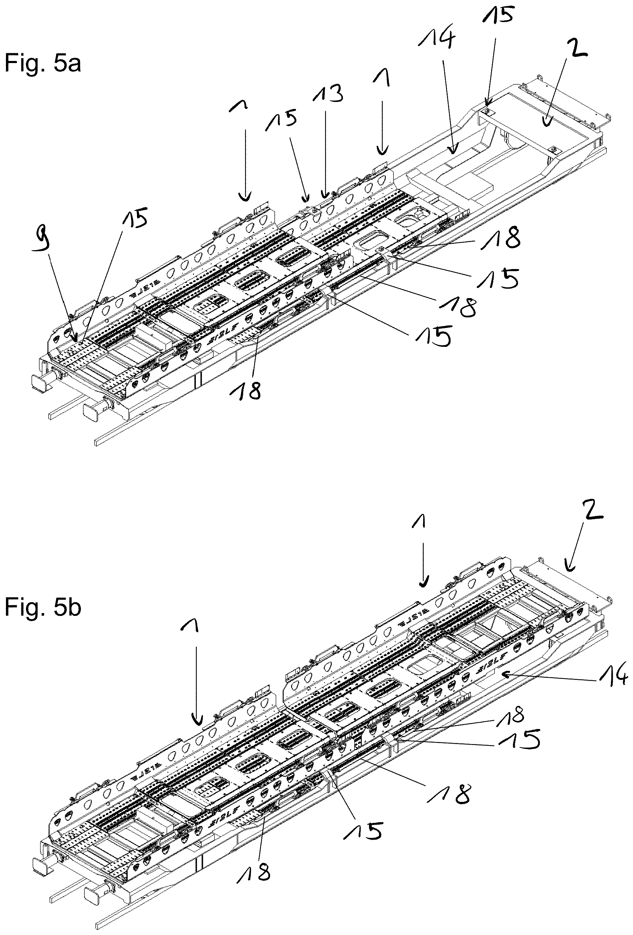

Wie in der Draufsicht der Figur 1b gezeigt ist, sind an der Unterseite des Tragrahmens 1 angeordnete Aufnahmeöffnungen 9 für Fixiermittel 15 (siehe beispielsweise Figuren 2a und 5a) wie etwa ISO-Zapfen zum Fixieren der Tragvorrichtung 1 an einem Schienenfahrzeug 2 vorgesehen. In der gezeigten Ausführung sind die Aufnahmeöffnungen 9 als Durchbrüche in der befahrbaren Abstützung 10 ausgebildet.

Weiter weist in der gezeigten Ausführung die befahrbare Abstützung 10 eine Kröpfung 11, d.h. einen von einem geraden bzw. ebenen Verlauf abweichenden Verlauf, auf. In dem durch die Kröpfung 11 geschaffenen Freiraum ist zumindest ein Anschlag 12 vorgesehen (siehe Figur 1c), welcher beispielsweise in Form eines elastischen Puffers ausgebildet sein kann. In diesen durch die Kröpfung 11 geschaffenen Freiraum kann ein Querträger 17 (siehe beispielsweise Figur 2c) eines Schienenfahrzeugs 2 hineinragen, wodurch sich beispielsweise eine in eine Tasche 14 eines Schienenfahrzeugs 2 eingesetzte Tragvorrichtung 1 gegen unerwünschte Versatzbewegungen, insbesondere bei einem Leertransport, sichern lassen kann.

In der gezeigten Ausführung der Tragvorrichtung 1 weisen die Längsträger 4 in den Abschnitten mit der Höhenerstreckung H jeweils ein Versteifungselement 18 auf. Die Versteifungselemente 18 sind jeweils in Form eines von den Längsträgern 4 lateral abstehenden Stegs ausgebildet.

Auch weisen die Längsträger 4 bereichsweise in den Abschnitten mit der gegenüber der Höhenerstreckung H verringerten Höhe ein Versteifungselement 18 auf. Die lösbaren Bügel 19 mit den daran ausgebildeten Greifkanten 5 sind an der Oberseite dieser Versteifungselemente 18 angeordnet.

In den Figuren 2a bis 2d ist ein Beladevorgang (oder in umgekehrter Betrachtungsreihenfolge ein Entladevorgang) einer Anordnung aus einem Schienenfahrzeug 2 und einer Tragvorrichtung 1 gemäß der Ausführung der Figur 1 gezeigt. Die Tragvorrichtung 1 ist mit einem Ladegut 3 in Form eines selbst nicht unmittelbar kranbaren Fahrzeugs beladen. Der gezeigte Beladungszustand der Tragvorrichtung 1 kann sich beispielsweise dadurch gegeben, dass ein Ladegut 3 in Form eines selbst nicht unmittelbar kranbaren Fahrzeugs auf eine auf einem Terminalflur 7 aufgestellte Tragvorrichtung 1 aufgefahren und auf dieser abgestellt wurde. Die so beladene Tragvorrichtung 1 kann gemeinsam mit dem Fahrzeug 3 durch eine an die Greifkanten 5 der Tragvorrichtung 1 angreifende Hubvorrichtung angehoben worden sein und wie dargestellt über eine Tasche 14 eines Schienenfahrzeugs 2 verbracht worden sein. Durch ein Absenken kann ein wie in den Figuren 2c und 2d gezeigtes Anordnen der beladenen Tragvorrichtung 1 über die gesamte Länge L_{A} der befahrbaren Abstützung 10 der Tragvorrichtung 1 innerhalb der Tasche 14 erfolgen. Wie dargestellt ist die Länge L_{A} der befahrbaren Abstützung geringer als die Längserstreckung L_{T} der Tasche 14 des Taschenwagens.

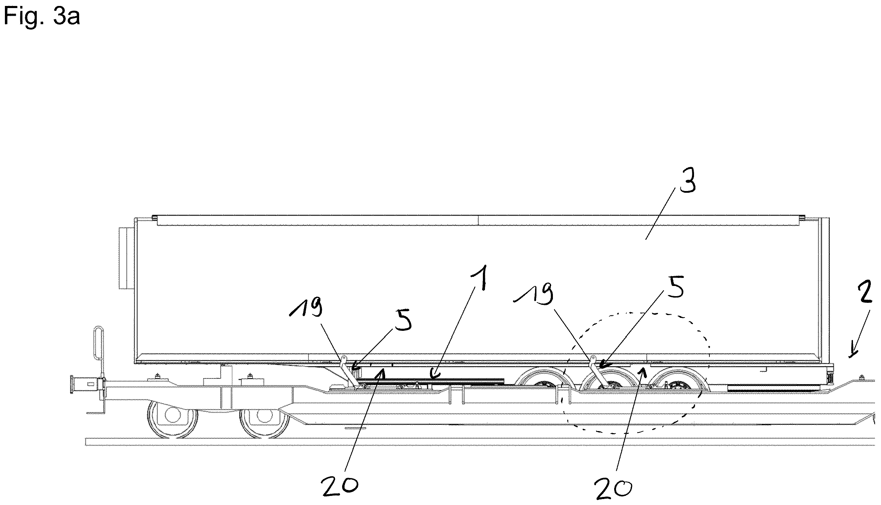

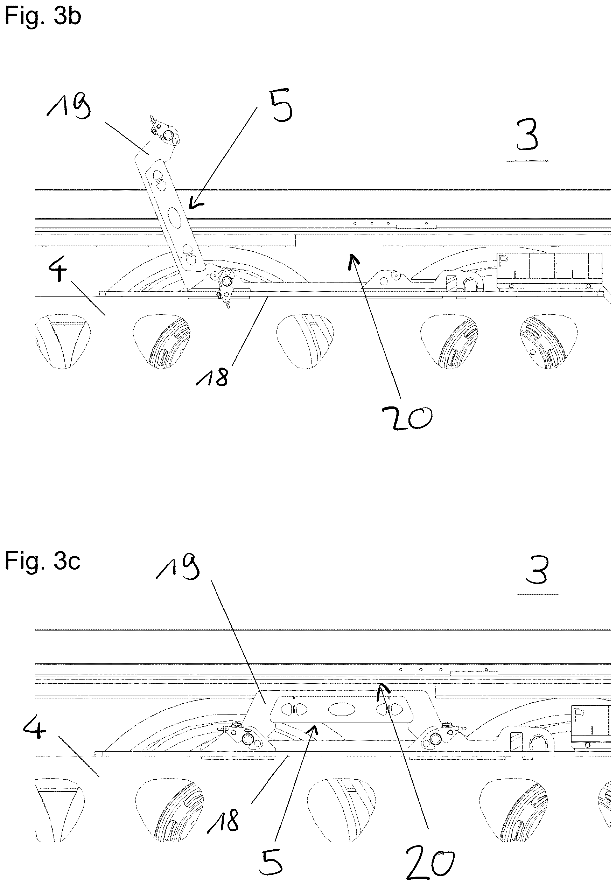

Die in den Figuren 2a bis 2b gezeigten Fixiermittel 15 an der Stirnseite und benachbart zur Tasche 14 am Schienenfahrzeug 2 können für unterschiedliche Beladungskonfigurationen, wie beispielsweise in den Figuren 3, 4 und 5 dargestellt, genutzt werden.

In den Figuren 3a bis 3c sind eine Seitenansicht und Detailansichten einer Anordnung aus einem Schienenfahrzeug 2 und einer Tragvorrichtung 1 gemäß der Ausführung der Figur 1 gezeigt, wobei die Tragvorrichtung 1 mit Ladegut 3 in Form eines unmittelbar kranbaren Fahrzeugs beladen ist.

Die Darstellung der Figur 3a kann beispielsweise einem Beladungszustand unmittelbar nach dem Abstellen (oder auch unmittelbar vor dem Herausheben) des Ladeguts 3 in Form des unmittelbar kranbaren Fahrzeugs auf die (oder von der) in der Tasche 14 des Schienenfahrzeugs 2 angeordnete Tragvorrichtung 1 entsprechen.

Der gezeigte Beladungszustand kann sich beispielsweise dadurch ergeben, dass eine auf einem Terminalflur 7 bereitgestellte Tragvorrichtung 1 mit einer an die Greifkanten 5 der Tragvorrichtung 1 angreifenden Hubvorrichtung angehoben und innerhalb der Tasche 14 des Schienenfahrzeugs 2 in Form eines Taschenwagens angeordnet wurde, und darauf folgend ein auf einem Terminalflur 7 bereitgestelltes unmittelbar kranbares Ladegut 3 in Form eines kranbaren Fahrzeugs mit einer an die Greifkanten 20 des kranbaren Fahrzeugs angreifenden Hubvorrichtung angehoben und auf der in der Tasche 14 des Schienenfahrzeugs 2 bereits angeordneten Tragvorrichtung 1 abgestellt wurde (ein Herausheben kann in umgekehrter Reihenfolge erfolgen). Vor dem Abstellen (oder dem Herausheben) des unmittelbar kranbaren Ladeguts 3 in Form eines kranbaren Fahrzeugs auf der (oder von der) in der Tasche 14 angeordneten Tragvorrichtung 1 sind die lösbaren Greifkanten 5 für die Hubvorrichtung von den jeweiligen Längsträgern 4 der Tragvorrichtung 1 gelöst worden bzw. zu lösen (Details hierzu sind den Figuren 7a bis 7c zu entnehmen).

Wie in der Detailansicht der Figuren 3b und 3c (strichliert markierter Bereich der Figur 3a) illustriert ist, kann es vorkommen, dass sich die Greifkanten 20 eines in der Tasche 14 angeordneten, kranbaren Fahrzeugs 3 an der im Wesentlichen gleichen Höhen- und Längsposition relativ zum Taschenwagen befinden, wie die Greifkanten 5 einer in der Tasche 14 angeordneten Tragvorrichtung 1 (Figur 3c). Durch ein Lösen der Greifkanten 5 vom jeweiligen Längsträger 4 (Figur 3b) kann den Greifern einer Hubvorrichtung ein Erreichen der Greifkanten 20 des kranbaren Ladeguts 3 gestattet werden.

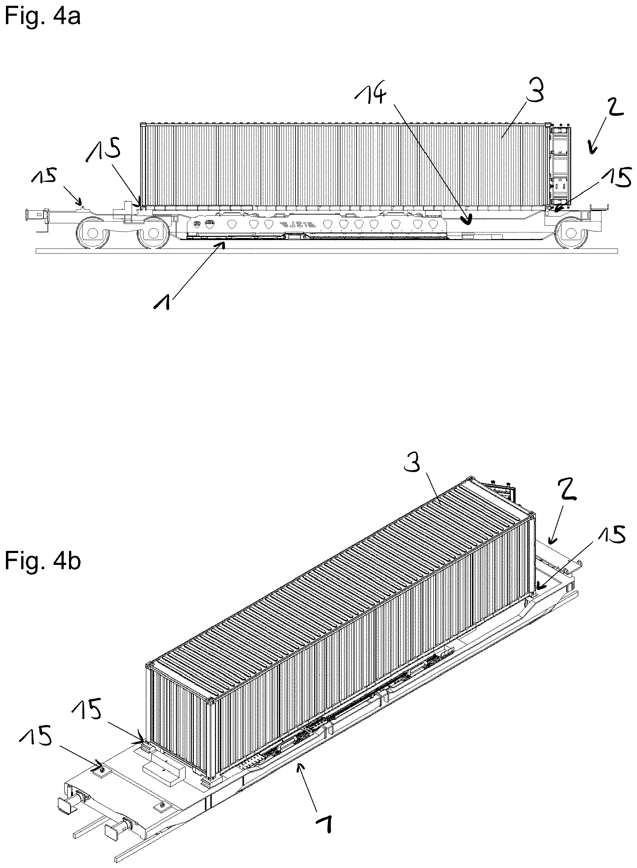

In den Figuren 4a bis 4d sind verschiedene Beladungszustände der Anordnung aus einem Schienenfahrzeug 2 mit einer Tragvorrichtung 1 gemäß Ausführung der Figur 1 gezeigt.

In den Figuren 4a und 4b ist oberhalb der Tasche 14 des Schienenfahrzeugs 2 ein Ladegut 3 in Form eines Containers angeordnet, wobei sich das Ladegut 3 an benachbart zur Tasche 14 und stirnseitig am Schienenfahrzeug 2 angeordneten Fixiermitteln 15 abstützt und an diesen fixiert ist.

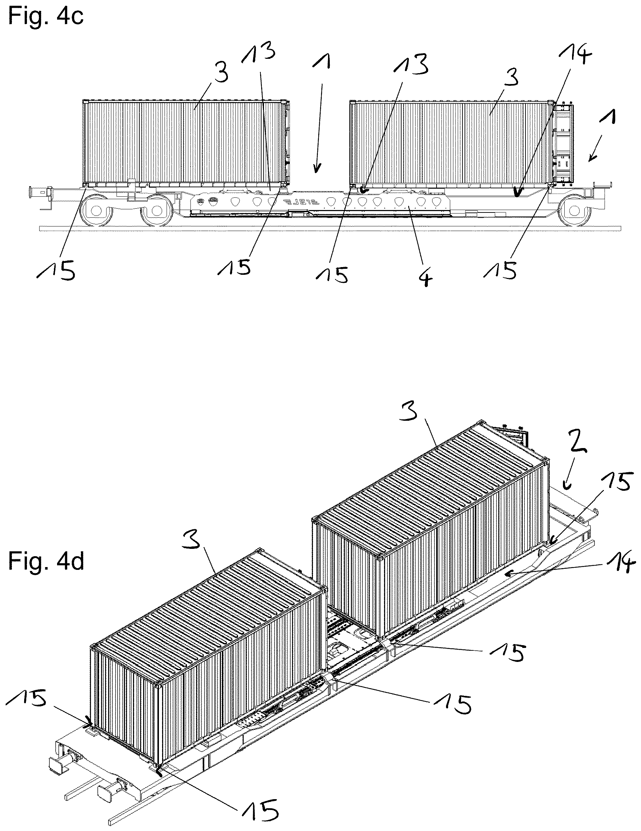

In den Figuren 4c und 4d sind oberhalb der Tasche 14 des Schienenfahrzeugs 2 Ladegüter 3 in Form von Containern angeordnet, wobei sich die Container jeweils an benachbart zur Tasche 14 sowie an im Bereich der Tasche 14 angeordneten Fixiermitteln 15 abstützen.

Die im Bereich der Tasche 14 angeordneten Fixiermittel 15 sind zwischen zwei Stellungen (einer Verwendungsposition und Verwahrposition) bewegbar, wobei besagte Fixiermittel 15 jeweils in der Verwendungsposition oberhalb der Tasche 14 angeordnet sind und jeweils in der Verwahrposition im Wesentlichen vollständig außerhalb der Tasche 14, beispielsweise jeweils an einer Außenseite des Taschenwagens, angeordnet sind.

Die zwei Längsträger 4 der über die gesamte Länge L_{A} der befahrbaren Abstützung 10 innerhalb der Tasche 14 angeordneten Tragvorrichtung 1 weisen jeweils abschnittsweise eine solche gegenüber der Höhenerstreckung H verringerte Höhe auf (vergleiche auch Figur 1a und 1c), dass die am Schienenfahrzeug 2 angeordneten Fixiermittel 15 im Bereich oberhalb der zumindest zwei Längsträger 4 anordenbar sind.

In den Figuren 5a bis 5f sind weitere unterschiedliche Beladungszustände einer Anordnung mit einem Schienenfahrzeug 2 und einer Tragvorrichtung 1 gemäß der Ausführung der Figur 1 gezeigt.

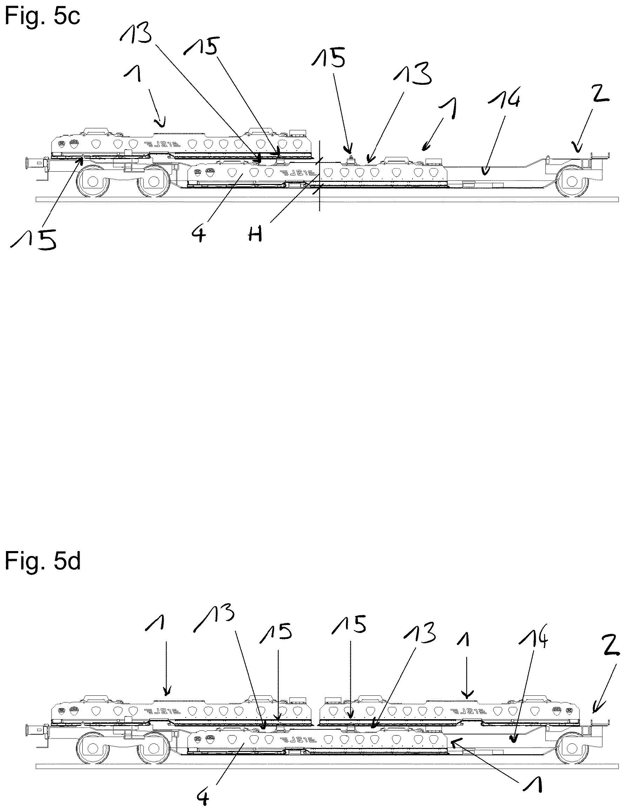

In den Figuren 5a und 5c befindet sich eine Tragvorrichtung 1 in der Tasche 14 des in Form eines Taschenwagen ausgebildeten Schienenfahrzeug 2. Eine weitere Tragvorrichtung 1 ist oberhalb der Tasche 14 angeordnet und ist einerseits an stirnseitig am Schienenfahrzeug 2 angeordneten und in die Aufnahmeöffnungen 9 eingreifenden Fixiermittel 15 abgestützt und fixiert, und andererseits an am Schienenfahrzeug 2 und im Bereich oberhalb der Tasche 14 angeordneten Fixiermittel 15 abgestützt und fixiert.

Durch die Ausnehmungen 13 an der Oberseite der Längsträger 4 ist es möglich, diese am Schienenfahrzeug 2 angeordneten Fixiermittel 15 im Bereich oberhalb der zumindest zwei Längsträger 4 anzuordnen. Dadurch können zusätzlich zu den außerhalb der Tasche 14 (benachbart zur Tasche 14 und stirnseitig am Schienenfahrzeug 2) bestehenden Fixiermitteln 15 zusätzliche Fixiermittel 15 im Bereich der Tasche 14 genutzt werden, während eine Tragvorrichtung 1 in der Tasche 14 angeordnet ist.

In den Figuren 5b und 5d ist zusätzlich eine dritte Tragvorrichtung 1 oberhalb der Tasche 14 angeordnet. Durch eine solche Anordnung von Tragvorrichtungen 1 kann eine Nutzung des Schienenfahrzeugs 2 in Form eines Taschenwagens analog zu einem Flachwagen erfolgen.

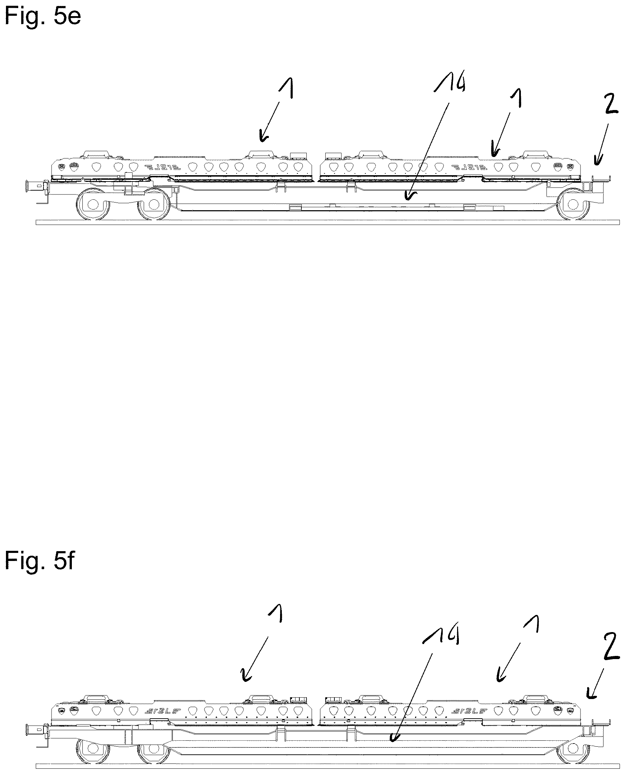

In den Figuren 5e und 5f ist die Anordnung von zwei Tragvorrichtungen 1 oberhalb der Tasche 14 eines Schienenfahrzeugs 2 gezeigt, wobei jedoch keine Tragvorrichtung 1 in der Tasche 14 angeordnet ist.

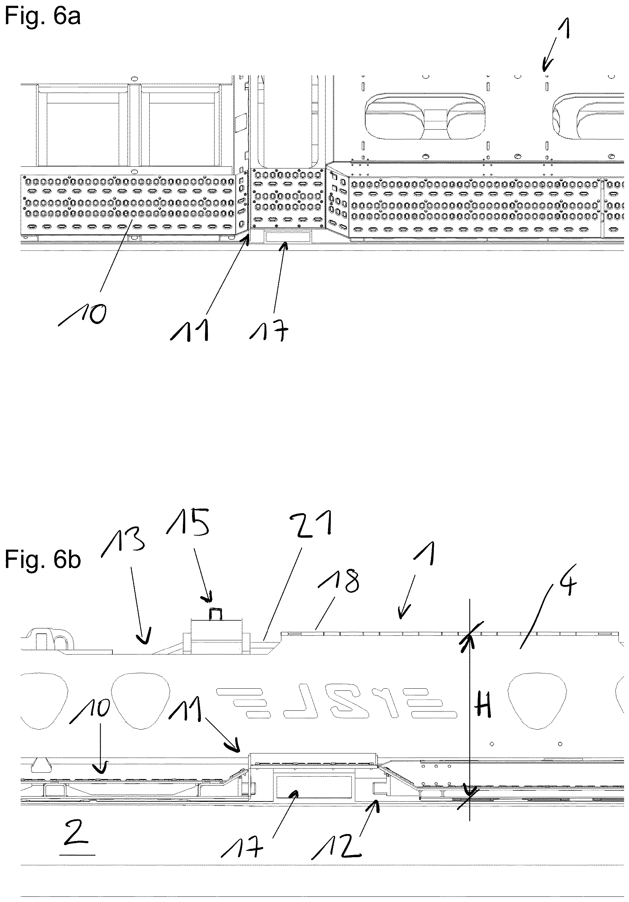

In den Figuren 6a und 6b sind Detailansichten einer in eine Tasche 14 eines Schienenfahrzeug 2 eingesetzten Tragvorrichtung 1 gemäß der Ausführung der Figur 1 gezeigt.

Dabei ist zunächst die Kröpfung 11 in der befahrbaren Abstützung 10 der Tragvorrichtung 1 erkennbar, wobei ein Querträger 17 des Schienenfahrzeugs 2 in den durch die Kröpfung 11 geschaffenen Freiraum hineinragt.

In Figur 6b ist erneut der in der Höhe variierende Verlauf der Längsträger 4 der Tragvorrichtung 1 gezeigt, wobei der abgebildete Längsträger 4 abschnittsweise eine durch Ausnehmungen 13 bedingte solche gegenüber der Höhenerstreckung H verringerte Höhe aufweist, dass die am Schienenfahrzeug 2 angeordneten Fixiermittel 15 im Bereich oberhalb der zumindest zwei Längsträger 4 anordenbar sind.

Es ist erkennbar, dass in dieser Ausführung bei der in der Tasche 14 angeordneten Tragvorrichtung 1 die Höhenerstreckung H der Längsträger 4 abschnittsweise über die Oberkante 21 der Tasche 14 des Taschenwagens hinausragt.

Die Höhe (von der befahrbaren Abstützung 10 aus gesehen) der Abschnitte mit der gegenüber der Höhenerstreckung H verringerten Höhe ist bei dieser Ausführung bei der in der Tasche 14 angeordneten Tragvorrichtung 1 geringer als die Höhe der Oberkante 21 der Tasche 14 des Taschenwagens im Bereich der Fixiermittel 15. Dies ist beispielsweise auch in der Seitenansicht der Figur 7a erkennbar.

In den Figuren 7a bis 7c, 8a bis 8c und 9a bis 9c sind jeweils Detailansichten zu unterschiedlichen Ausführungen der Tragvorrichtung 1 gezeigt, wobei sich die gezeigten Ausführungen im Wesentlichen in der Ausführung der lösbaren Greifkanten 5 unterscheiden.

In den Figuren 7a bis 7c ist eine Ausführung der lösbaren Greifkanten 5 gemäß der Ausführung der Tragvorrichtung 1 der Figur 1 gezeigt. In dieser Ausführung ist die Greifkante 5 an einem um eine horizontale Schwenkachse verschwenkbaren Bügel 19 ausgebildet. Der Bügel 19 ist beidseitig mit lösbaren Arretiervorrichtungen 22 am Längsträger 4 der Tragvorrichtung 1 schwenkbar gelagert. Die in Figur 7a gezeigte Stellung des Bügels 19 entspricht der Verwendungsposition, in welcher die Greifer einer Hubvorrichtung an die Greifkanten 5 für einen Hubvorgang angreifen können. Die in den Figuren 7b und 7c gezeigten Stellungen des Bügels 19 entsprechen der Verwahrposition, in welcher den Greifern einer Hubvorrichtung ein Erreichen eines auf der Tragvorrichtung 1 abgestellten Ladeguts 3 gestattet wird (siehe dazu die Figuren 3a bis 3c). Der Bügel 19 kann in dieser Ausführung auch gänzlich von der Tragvorrichtung 1 gelöst werden.

In den Figuren 8a bis 8c ist eine weitere Ausführung der lösbaren Greifkanten 5 gezeigt. In dieser Ausführung sind die Greifkanten 5 an einem um vertikale Schwenkachsen verschwenkbaren Bügel 19 ausgebildet. Die schwenkbare Lagerung des Bügels 19 am Längsträger 4 ist hier durch eine Verschraubung 23 ausgeführt. Die in den Figuren 8a bis 8c gezeigten Stellungen entsprechen in ihrer Eignung jenen der Figuren 7a bis 7c. Der Bügel 19 kann in dieser Ausführung auch gänzlich von der Tragvorrichtung 1 gelöst werden.

In den Figuren 9a bis 9c ist eine weitere Ausführung der lösbaren Greifkanten 5 gezeigt. In dieser Ausführung sind die Greifkanten 5 an einem entlang einer Führungsschiene 24 verschiebbaren und mit einer Verbolzung 25 arretierbaren Bügel 19 ausgebildet. Die in den Figuren 9a bis 9c gezeigten Stellungen können in ihrer Eignung grundsätzlich jenen der Figuren 7a bis 7c entsprechen. Es ist jedoch auch möglich, dass jede der in den Figuren 9a bis 9c gezeigte Stellung einer Verwendungsposition oder einer Verwahrposition entspricht. Der Bügel 19 kann in dieser Ausführung auch gänzlich von der Tragvorrichtung 1 gelöst werden.

Die in den In den Figuren 7a bis 7c, 8a bis 8c und 9a bis 9c gezeigten lösbaren Greifkanten 5 sind jeweils von außerhalb der Tasche 14 zugänglich und lösbar.

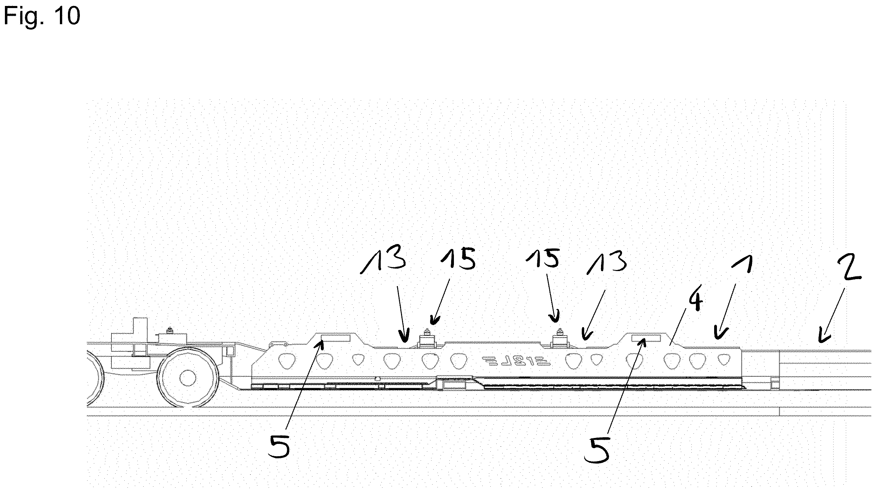

In Figur 10 ist eine Seitenansicht einer Anordnung mit einem Schienenfahrzeug 2 und einer vierten Ausführung einer Tragvorrichtung 1 gezeigt. Diese Ausführung unterscheidet sich im Wesentlichen von jener der zuvor diskutierten darin, dass die Greifkanten 5 in den Längsträgern 4 ausgebildet sind. Auch für eine solche Ausführung einer Tragvorrichtung 1 sind Beladungszustände gemäß den Figuren 2, 4 und 5 möglich.

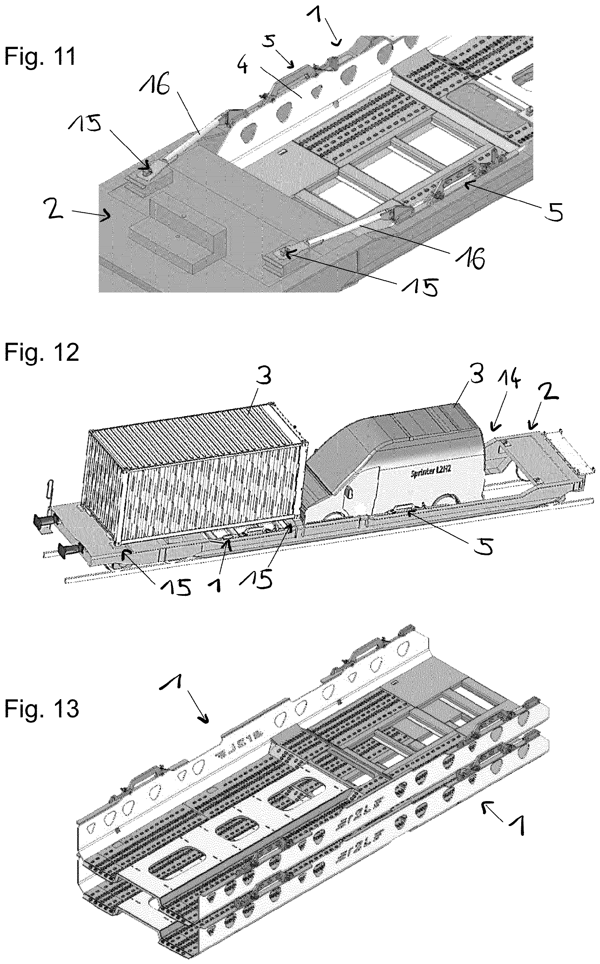

In Figur 11 ist eine perspektivische Ansicht einer Ausführung einer Längsabstützung 16 gezeigt, über welche die Tragvorrichtung 1 an Fixiermitteln 15 des Schienenfahrzeugs 2 abstützbar ist. Die zur Abstützung verwendeten Fixiermittel 15 sind hier stirnseitig benachbart zur Tasche 14 am Schienenfahrzeug 2 angeordnet.

In Figur 12 ist eine perspektivische Ansicht eines möglichen Beladungszustands einer Anordnung mit einem Schienenfahrzeug 2 und einer Tragvorrichtung 1 gemäß der Ausführung der Figur 1 gezeigt, wobei die in der Tasche 14 des Schienenfahrzeug 2 angeordnete Tragvorrichtung 1 mit einem nicht kranbaren Ladegut 3 in Form eines Fahrzeugs beladen ist und auf am Schienenfahrzeug 2 angeordneten Fixiermittel 15 zusätzlich ein Ladegut in Form eines Containers 3 oberhalb der Tasche 14 geladen ist.

In Figur 13 ist eine perspektivische Ansicht von aufeinandergestapelten Tragvorrichtungen 1 gemäß der Ausführung der Figur 1 gezeigt.

### Bezugszeichenliste:

- 1: hebbare Tragvorrichtung
- 2: Schienenfahrzeug
- 3: Ladegut
- 4: Längsträger
- 5: Greifkante
- 6: Aufstandsfläche
- 7: Terminalflur
- 8: Tragrahmen
- 9: Aufnahmeöffnung für Fixiermittel
- 10: befahrbare Abstützung
- 11: Kröpfung der befahrbaren Abstützung
- 12: Anschlag für einen Querträger eines Schienenfahrzeugs
- 13: Ausnehmung am Längsträger
- 14: Tasche eines Taschenwagens
- 15: Fixiermittel
- 16: Längsabstützung
- 17: Querträger
- 18: Versteifungselement
- 19: Bügel
- 20: Greifkanten Fahrzeug
- 21: Oberkante Taschenwagen
- 22: Arretiervorrichtung
- 23: Verschraubung
- 24: Führungsschiene
- 25: Verbolzung
- H: Höhenerstreckung Längsträger
- L_{A}: Längserstreckung der Abstützung
- L_{T}: Längserstreckung der Tasche

## Patentansprüche

1. Anordnung aus einem Schienenfahrzeug (2) in Form eines Taschenwagens und zumindest einer hebbaren Tragvorrichtung (1) für das Beladen des Schienenfahrzeuges (2) mit wenigstens einem Fahrzeug (3) durch eine Hubvorrichtung, wobei
der Taschenwagen
- eine Tasche (14) und zwischen zwei Stellungen bewegbar am Taschenwagen angeordnete Fixiermittel (15) aufweist und wobei
die hebbare Tragvorrichtung (1)
- einen Tragrahmen (8) mit zumindest zwei miteinander verbundenen, zumindest abschnittsweise eine Höhenerstreckung (H) aufweisenden Längsträgern (4) aufweist, wobei der Tragrahmen (8) eine sich mit einer Länge (L_{A}) entlang der zumindest zwei Längsträgern (4) erstreckende, zwischen diesen verlaufende, befahrbare Abstützung (10) für das Fahrzeug (3) aufweist und
- die zumindest zwei Längsträger (4) jeweils wenigstens zwei Greifkanten (5) für die Hubvorrichtung aufweisen, und wobei die hebbare Tragvorrichtung (1)
- Aufstandsflächen (6) zum unmittelbaren Aufstellen der Tragvorrichtung (1) auf einem Terminalflur (7) aufweist, wobei
- zumindest eine Tragvorrichtung (1) über die gesamte Länge (L_{A}) der befahrbaren Abstützung (10) innerhalb der Tasche (14) anordenbar ist und die zumindest zwei Längsträger (4) jeweils abschnittsweise eine solche gegenüber der Höhenerstreckung (H) verringerte Höhe aufweisen, dass die am Schienenfahrzeug (2) angeordneten Fixiermittel (15) im Bereich oberhalb der zumindest zwei Längsträger (4) anordenbar sind, wobei die Längsträger (4) in den Abschnitten mit verringerter Höhe an der Oberseite zumindest zwei Ausnehmungen (13) aufweisen, **dadurch gekennzeichnet, dass**
- wenigstens zwei, an der Unterseite des Tragrahmens (8) angeordnete Aufnahmeöffnungen (9) für Fixiermittel (15), vorzugsweise für ISO-Zapfen, zum Fixieren der Tragvorrichtung (1) am Schienenfahrzeug (2) vorgesehen sind, wobei die Aufnahmeöffnungen (9) in der befahrbaren Abstützung (10) ausgebildet sind, wobei zumindest eine Tragvorrichtung (1) oberhalb der Tasche (14) an den Fixiermitteln (15) des Taschenwagens fixierbar ist.

2. Anordnung nach einem der vorangehenden Ansprüche, wobei die Länge (L_{A}) der befahrbaren Abstützung (10) im Wesentlichen der Länge der Längsträger (4) entspricht.

3. Anordnung nach einem der vorangehenden Ansprüche, wobei die wenigstens zwei Greifkanten (5) für die Hubvorrichtung zumindest zum Teil an den Längsträgern (4) ausgebildet sind und/oder zumindest zum Teil lösbar an dem jeweiligen Längsträger (4) angeordnet sind.

4. Anordnung nach dem vorangehenden Anspruch, wobei die lösbar an dem jeweiligen Längsträger (4) angeordneten Greifkanten (5) für die Hubvorrichtung jeweils zwischen zumindest einer Verwendungsposition und zumindest einer Verwahrposition, vorzugsweise begrenzt, bewegbar sind und besonders bevorzugt jeweils zwischen zumindest einer Verwendungsposition und zumindest einer Verwahrposition verschwenkbar sind.

5. Anordnung nach einem der vorangehenden Ansprüche, wobei die befahrbare Abstützung (10) für das Fahrzeug (3) eine Kröpfung (11) aufweist.

6. Anordnung nach dem vorangehenden Anspruch, wobei die befahrbare Abstützung (10) für das Fahrzeug (3) in einem durch die Kröpfung (11) geschaffenen Freiraum zumindest einen Anschlag (12), vorzugsweise in Form eines elastischen Puffers, für einen Querträger (17) des Schienenfahrzeugs (2) aufweist.

7. Anordnung nach einem der vorangehenden Ansprüche, wobei der Tragrahmen (8) zumindest eine Längsabstützung (16) aufweist, über welche die Tragvorrichtung (1) an - vorzugsweise stirnseitig am Schienenfahrzeug (2) angeordneten - Fixiermitteln (15) des Schienenfahrzeugs (2) abstützbar ist.

8. Anordnung nach einem der vorangehenden Ansprüche, wobei zumindest eine weitere Tragvorrichtung (1) oberhalb der Tasche (14) an den Fixiermitteln (15) des Taschenwagens fixierbar ist.

9. Anordnung nach einem der vorangehenden Ansprüche, wobei die zwischen zwei Stellungen bewegbar am Taschenwagen angeordneten Fixiermittel (15) jeweils zwischen einer Verwendungsposition und einer Verwahrposition vorzugsweise begrenzt, bewegbar sind und besonders bevorzugt jeweils zwischen einer Verwendungsposition und einer Verwahrposition verschwenkbar sind, wobei vorzugsweise die Fixiermittel (15) in der Verwendungsposition oberhalb der Tasche (14) angeordnet sind und in der Verwahrposition im Wesentlichen vollständig außerhalb der Tasche (14), vorzugsweise jeweils an einer Außenseite des Taschenwagens, angeordnet sind.

10. Anordnung nach einem der vorangehenden Ansprüche, wobei die Längsträger (4) zumindest abschnittsweise in den Abschnitten mit der Höhenerstreckung (H) zumindest ein Versteifungselement (18) aufweisen.

11. Anordnung nach dem vorangehenden Anspruch, wobei das zumindest eine Versteifungselement (18) quer zu einer Längserstreckung der Längsträger (4) und quer zur Höhenerstreckung der Längsträger (4) ausgebildet ist, vorzugsweise durch zumindest einen von den Längsträgern (4) abstehenden Steg.

12. Verfahren zum Beladen eines Schienenfahrzeugs (2) in Form eines Taschenwagens mit wenigstens einem Fahrzeug (3) unter Verwendung einer Anordnung nach wenigstens einem der Ansprüche 1 bis 11, **dadurch gekennzeichnet, dass** das Verfahren zumindest die folgenden Schritte aufweist:
- Bereitstellen einer ersten und wenigstens einer zweiten Tragvorrichtung (1) auf dem Terminalflur (7), wobei ggf. die erste und die wenigstens eine zweite Tragvorrichtung (1) unabhängig voneinander auf dem Terminalflur (7) aufstehen
- ggf. Beladen der ersten Tragvorrichtung (1) vorzugsweise durch Auffahren des Fahrzeuges (3) oder der Fahrzeuge
- Anheben und Verbringen der - ggf. beladenen - ersten Tragvorrichtung (1) mit einer Hubvorrichtung über die Tasche (14) des Schienenfahrzeugs (2) in Form eines Taschenwagens, wobei die Hubvorrichtung für den Hebevorgang an den wenigstens zwei Greifkanten (5) der Tragvorrichtung (1) angreift
- Anordnen der - ggf. beladenen - ersten Tragvorrichtung (1) über die gesamte Länge (L_{A}) der befahrbaren Abstützung (10) der Tragvorrichtung (1) innerhalb der Tasche (14), oder Anordnen und Fixieren der - ggf. beladenen - ersten Tragvorrichtung (1) oberhalb der Tasche (14) an den Fixiermitteln (15) des Taschenwagens
- Anordnen der am Schienenfahrzeug (2) angeordneten Fixiermittel (15) im Bereich oberhalb der zumindest zwei Längsträger (4) der ersten Tragvorrichtung (1) bei innerhalb der Tasche (14) angeordneter erster Tragvorrichtung (1)
- ggf. Beladen der wenigstens einen zweiten Tragvorrichtung (1) vorzugsweise durch Auffahren des weiteren Fahrzeuges (3) oder der weiteren Fahrzeuge
- Anheben und Verbringen der - ggf. beladenen - wenigstens einen zweiten Tragvorrichtung (1) mit einer Hubvorrichtung über das Schienenfahrzeug (2) in Form eines Taschenwagens, wobei die Hubvorrichtung für den Hebevorgang an den wenigstens zwei Greifkanten (5) der Tragvorrichtung (1) angreift
- Anordnen und Fixieren der - ggf. beladenen - wenigstens einen zweiten Tragvorrichtung (1) oberhalb der Tasche (14) an den, bei innerhalb der Tasche (14) angeordneter erster Tragvorrichtung (1) im Bereich oberhalb der zumindest zwei Längsträger (4) der ersten Tragvorrichtung (1) angeordneten, Fixiermitteln (15).

13. Verfahren nach Anspruch 12, wobei die erste Tragvorrichtung (1) innerhalb der Tasche (14) angeordnet ist und das Verfahren zumindest die folgenden weiteren Schritte aufweist:
- Bereitstellen wenigstens einer dritten Tragvorrichtung (1) auf dem Terminalflur (7), wobei ggf. die erste und die zweite und die wenigstens eine dritte Tragvorrichtung (1) unabhängig voneinander auf dem Terminalflur (7) aufstehen
- ggf. Beladen der wenigstens einen dritten Tragvorrichtung (1) vorzugsweise durch Auffahren eines weiteren Fahrzeuges (3) oder der weiteren Fahrzeuge
- Anheben und Verbringen der-ggf. beladenen-wenigstens einen dritten Tragvorrichtung (1) mit einer Hubvorrichtung über das Schienenfahrzeug (2) in Form eines Taschenwagens, wobei die Hubvorrichtung für den Hebevorgang an den wenigstens zwei Greifkanten (5) der Tragvorrichtung (1) angreift
- Anordnen und Fixieren der - ggf. beladenen - wenigstens einen dritten Tragvorrichtung (1) oberhalb der Tasche (14) an den im Bereich oberhalb der zumindest zwei Längsträger (4) der ersten Tragvorrichtung (1) angeordneten Fixiermitteln (15) zur Ausbildung eines Flachwagens
- ggf. Beladen der zweiten und der wenigstens einen dritten Tragvorrichtung (1) - falls diese nicht bereits beladen wurden - vorzugsweise durch Auffahren des Fahrzeuges (3) oder der Fahrzeuge auf den Flachwagen.

## Claims

1. Assembly of a rail vehicle (2) in the form of a pocket wagon and at least one liftable carrying device (1) for loading at least one vehicle (3) onto the rail vehicle (2) using a lifting device, wherein
the pocket wagon
- has a pocket (14) and fasteners (15) arranged on the pocket wagon movable between two positions and wherein
the liftable carrying device (1)
- has a carrying frame (8) with at least two side members (4), which are connected to each other and have a vertical extent (H) at least in sections, wherein the carrying frame (8) has a traversable support (10), extending with a length (LA) along the at least two side members (4) and running between them, for the vehicle (3) and
- the at least two side members (4) each have at least two gripping edges (5) for the lifting device, and wherein the liftable carrying device (1)
- has contact areas (6) for positioning the carrying device (1) directly on a terminal floor (7), wherein
- at least one carrying device (1) can be arranged inside the pocket (14) over the entire length (LA) of the traversable support (10) and the at least two side members (4), in each case in sections, have such a height reduced compared with the vertical extent (H) that the fasteners (15) arranged on the rail vehicle (2) can be arranged in the region above the at least two side members (4), wherein the side members (4) have at least two recesses (13) on the upper side in the sections with reduced height, **characterized in that**
- at least two receiving openings (9), arranged on the underside of the carrying frame (8), are provided for fasteners (15), preferably for ISO pins, for fastening the carrying device (1) to the rail vehicle (2), wherein the receiving openings (9) are formed in the traversable support (10), wherein at least one carrying device (1) can be fastened to the fasteners (15) of the pocket wagon above the pocket (14).

2. Assembly according to one of the preceding claims, wherein the length (LA) of the traversable support (10) substantially corresponds to the length of the side members (4).

3. Assembly according to one of the preceding claims, wherein the at least two gripping edges (5) for the lifting device are at least in part formed on the side members (4) and/or are at least in part arranged detachably on the respective side member (4).

4. Assembly according to the preceding claim, wherein the gripping edges (5), arranged detachably on the respective side member (4), for the lifting device are movable, preferably in a limited manner, in each case between at least one use position and at least one storage position, and particularly preferably are pivotable in each case between at least one use position and at least one storage position.

5. Assembly according to one of the preceding claims, wherein the traversable support (10) for the vehicle (3) has an offset (11).

6. Assembly according to the preceding claim, wherein the traversable support (10) for the vehicle (3) has at least one limit stop (12), preferably in the form of an elastic buffer, for a cross member (17) of the rail vehicle (2), in a free space created by the offset (11).

7. Assembly according to one of the preceding claims, wherein the carrying frame (8) has at least one longitudinal support (16), via which the carrying device (1) can be supported on fasteners (15) - preferably arranged on the rail vehicle (2) at the front end - of the rail vehicle (2).

8. Assembly according to one of the preceding claims, wherein at least one further carrying device (1) can be fastened to the fasteners (15) of the pocket wagon above the pocket (14).

9. Assembly according to one of the preceding claims, wherein the fasteners (15) arranged on the pocket wagon movable between two positions are movable, preferably in a limited manner, in each case between a use position and a storage position, and particularly preferably are pivotable in each case between a use position and a storage position, wherein preferably the fasteners (15) are arranged above the pocket (14) in the use position and are arranged substantially completely outside the pocket (14), preferably in each case on an outside of the pocket wagon, in the storage position.

10. Assembly according to one of the preceding claims, wherein the side members (4) at least in sections have at least one stiffening element (18) in the sections with the vertical extent (H).

11. Assembly according to the preceding claim, wherein the at least one stiffening element (18) is formed transverse to a longitudinal extent of the side members (4) and transverse to the vertical extent of the side members (4), preferably by at least one bar protruding from the side members (4).

12. Method for loading at least one vehicle (3) onto a rail vehicle (2) in the form of a pocket wagon using an assembly according to at least one of claims 1 to 11, **characterized in that** the method has at least the following steps:
- providing a first and at least one second carrying device (1) on the terminal floor (7), wherein, possibly, the first and the at least one second carrying device (1) stand, independently of each other, on the terminal floor (7)
- possibly loading the first carrying device (1), preferably by driving the vehicle (3) or the vehicles onto it
- lifting and moving the - possibly loaded - first carrying device (1) with a lifting device over the pocket (14) of the rail vehicle (2) in the form of a pocket wagon, wherein for the lifting process the lifting device engages the at least two gripping edges (5) of the carrying device (1)
- arranging the - possibly loaded - first carrying device (1) inside the pocket (14) over the entire length (L_{A}) of the traversable support (10) of the carrying device (1), or arranging and fastening the - possibly loaded - first carrying device (1) on/to the fasteners (15) of the pocket wagon above the pocket (14)
- arranging the fasteners (15) arranged on the rail vehicle (2) in the region above the at least two side members (4) of the first carrying device (1) if the first carrying device (1) is arranged inside the pocket (14)
- possibly loading the at least one second carrying device (1), preferably by driving the further vehicle (3) or the further vehicles onto it
- lifting and moving the - possibly loaded - at least one second carrying device (1) with a lifting device over the rail vehicle (2) in the form of a pocket wagon, wherein for the lifting process the lifting device engages the at least two gripping edges (5) of the carrying device (1)
- arranging and fastening the - possibly loaded - at least one second carrying device (1) on/to the fasteners (15), arranged in the region above the at least two side members (4) of the first carrying device (1) if the first carrying device (1) is arranged inside the pocket (14), above the pocket (14).

13. Method according to claim 12, wherein the first carrying device (1) is arranged inside the pocket (14) and the method has at least the following further steps:
- providing at least one third carrying device (1) on the terminal floor (7), wherein, possibly, the first and the second and the at least one third carrying device (1) stand, independently of each other, on the terminal floor (7)
- possibly loading the at least one third carrying device (1), preferably by driving a further vehicle (3) or the further vehicles onto it
- lifting and moving the - possibly loaded - at least one third carrying device (1) with a lifting device over the rail vehicle (2) in the form of a pocket wagon, wherein for the lifting process the lifting device engages the at least two gripping edges (5) of the carrying device (1)
- arranging and fastening the - possibly loaded - at least one third carrying device (1) on/to the fasteners (15), arranged in the region above the at least two side members (4) of the first carrying device (1), above the pocket (14) to form a flat wagon
- possibly loading the second and the at least one third carrying device (1) - unless these have already been loaded - preferably by driving the vehicle (3) or the vehicles onto the flat wagon.

## Revendications

1. Ensemble composé d'un véhicule ferroviaire (2) sous forme d'un wagon-poche et d'au moins un dispositif de support (1) pouvant être levé pour le chargement du véhicule ferroviaire (2) avec au moins un véhicule (3) par un dispositif de levage, dans lequel
le wagon-poche
- présente une poche (14) et des moyens de fixation (15) disposés sur le wagon-poche de manière à pouvoir se déplacer entre deux situations et dans lequel
le dispositif de support (1) pouvant être levé
- présente un cadre de support (8) avec au moins deux longerons (4) reliés l'un à l'autre, présentant au moins sur certaines parties une étendue en hauteur (H), dans lequel le cadre de support (8) présente un appui praticable (10) pour le véhicule (3), s'étendant avec une longueur (LA) le long des au moins deux longerons (4), passant entre ceux-ci, et
- es au moins deux longerons (4) présentent respectivement au moins deux bords de préhension (5) pour le dispositif de levage, et dans lequel le dispositif de support (1) pouvant être levé
- présente des surfaces de contact au sol (6) pour l'installation directe du dispositif de support (1) sur une rampe d'accès de terminal (7),
dans lequel
- au moins un dispositif de support (1) peut être disposé sur toute la longueur (LA) de l'appui praticable (10) à l'intérieur de la poche (14) et les au moins deux longerons (4) présentent respectivement sur certaines parties une telle hauteur réduite par rapport à l'étendue en hauteur (H) que les moyens de fixation (15) disposés sur le véhicule ferroviaire (2) peuvent être disposés dans la zone au-dessus des au moins deux longerons (4), dans lequel les longerons (4) présentent dans les parties avec une hauteur réduite sur la face supérieure au moins deux évidements (13), **caractérisé en ce que**
- au moins deux ouvertures de réception (9) pour des moyens de fixation (15) disposées sur la face inférieure du cadre de support (8), de préférence pour des tourillons ISO, sont prévues pour fixer le dispositif de support (1) sur le véhicule ferroviaire (2), dans lequel les ouvertures de réception (9) sont réalisées dans l'appui praticable (10), dans lequel au moins un dispositif de support (1) peut être fixé au-dessus de la poche (14) sur les moyens de fixation (15) du wagon-poche.

2. Ensemble selon l'une quelconque des revendications précédentes, dans lequel la longueur (L_{A}) de l'appui praticable (10) correspond sensiblement à la longueur du longeron (4).

3. Ensemble selon l'une quelconque des revendications précédentes, dans lequel les au moins deux bords de préhension (5) pour le dispositif de levage sont réalisés au moins en partie sur les longerons (4) et/ou sont disposés au moins en partie de manière détachable sur le longeron (4) respectif.

4. Ensemble selon la revendication précédente, dans lequel les bords de préhension (5) disposés de manière détachable sur le longeron (4) respectif pour le dispositif de levage peuvent se déplacer, de préférence de manière limitée, respectivement entre au moins une position d'utilisation et au moins une position de rangement, et de manière particulièrement préférée peuvent pivoter respectivement entre au moins une position d'utilisation et au moins une position de rangement.

5. Ensemble selon l'une quelconque des revendications précédentes, dans lequel l'appui praticable (10) pour le véhicule (3) présente un coude (11).

6. Ensemble selon la revendication précédente, dans lequel l'appui praticable (10) pour le véhicule (3) présente dans un espace libre créé par le coude (11) au moins une butée (12), de préférence sous forme d'un tampon élastique, pour une traverse (17) du véhicule ferroviaire (2).

7. Ensemble selon l'une quelconque des revendications précédentes, dans lequel le cadre de support (8) présente au moins un appui longitudinal (16), par l'intermédiaire duquel le dispositif de support (1) peut être en appui sur des moyens de fixation (15) du véhicule ferroviaire (2) - de préférence disposés frontalement sur le véhicule ferroviaire (2).

8. Ensemble selon l'une quelconque des revendications précédentes, dans lequel au moins un autre dispositif de support (1) peut être fixé au-dessus de la poche (14) sur les moyens de fixation (15) du wagon-poche.

9. Ensemble selon l'une quelconque des revendications précédentes, dans lequel les moyens de fixation (15) disposés sur le wagon-poche de manière à pouvoir se déplacer entre deux situations peuvent se déplacer de préférence de manière limitée respectivement entre une position d'utilisation et une position de rangement et de manière particulièrement préférée peuvent pivoter respectivement entre une position d'utilisation et une position de rangement, dans lequel de préférence les moyens de fixation (15) dans la position d'utilisation sont disposés au-dessus de la poche (14) et dans la position de rangement sont disposés sensiblement entièrement à l'extérieur de la poche (14), de préférence respectivement sur une face extérieure du wagon-poche.

10. Ensemble selon l'une quelconque des revendications précédentes, dans lequel les longerons (4) présentent au moins sur certaines parties dans les parties avec l'étendue en hauteur (H) au moins un élément de renforcement (18).

11. Ensemble selon la revendication précédente, dans lequel l'au moins un élément de renforcement (18) est réalisé transversalement par rapport une étendue longitudinale des longerons (4) et transversalement par rapport à l'étendue en hauteur des longerons (4), de préférence par au moins une entretoise faisant saillie des longerons (4).

12. Procédé pour charger un véhicule ferroviaire (2) sous forme d'un wagon-poche avec au moins un véhicule (3) au moyen d'un ensemble selon au moins l'une des revendications 1 à 11, **caractérisé en ce que** le procédé présente au moins les étapes suivantes :
- la fourniture d'un premier et d'au moins un deuxième dispositif de support (1) sur la rampe d'accès de terminal (7), dans lequel éventuellement le premier et l'au moins un deuxième dispositif de support (1) sont posés indépendamment l'un de l'autre sur la rampe d'accès de terminal (7)
- éventuellement le chargement du premier dispositif de support (1) de préférence par montée du véhicule (3) ou des véhicules
- le levage et l'amenée du premier dispositif de support (1) - éventuellement chargé - avec un dispositif de levage par-dessus la poche (14) du véhicule ferroviaire (2) sous forme d'un wagon-poche, dans lequel le dispositif de levage pour le processus de levage agit sur les au moins deux bords de préhension (5) du dispositif de support (1)
- la disposition du premier dispositif de support (1) - éventuellement chargé - sur toute la longueur (L_{A}) de l'appui praticable (10) du dispositif de support (1) à l'intérieur de la poche (14), ou la disposition et la fixation du premier dispositif de support (1) - éventuellement chargé - au-dessus de la poche (14) sur les moyens de fixation (15) du wagon-poche
- la disposition des moyens de fixation (15) disposés sur le véhicule ferroviaire (2) dans la zone au-dessus des au moins deux longerons (4) du premier dispositif de support (1) lorsque le premier dispositif de support (1) est disposé à l'intérieur de la poche (14)
- éventuellement le chargement de l'au moins un deuxième dispositif de support (1) de préférence par montée de l'autre véhicule (3) ou des autres véhicules
- le levage et l'amenée de l'au moins un deuxième dispositif de support (1) - éventuellement chargé - avec un dispositif de levage par-dessus le véhicule ferroviaire (2) sous forme d'un wagon-poche, dans lequel le dispositif de levage pour le processus de levage agit sur les au moins deux bords de préhension (5) du dispositif de support (1)
- la disposition et la fixation de l'au moins un deuxième dispositif de support (1) - éventuellement chargé - au-dessus de la poche (14) sur les moyens de fixation (15) disposés dans la zone au-dessus des au moins deux longerons (4) du premier dispositif de support (1) lorsque le premier dispositif de support (1) est disposé à l'intérieur de la poche (14).

13. Procédé selon la revendication 12, dans lequel le premier dispositif de support (1) est disposé à l'intérieur de la poche (14) et le procédé présente au moins les autres étapes suivantes :
- la fourniture d'au moins un troisième dispositif de support (1) sur la rampe d'accès de terminal (7), dans lequel éventuellement le premier et le deuxième et l'au moins un troisième dispositif de support (1) sont posés indépendamment les uns des autres sur la rampe d'accès de terminal (7)
- éventuellement le chargement de l'au moins un troisième dispositif de support (1) de préférence par montée d'un autre véhicule (3) ou des autres véhicules
- le levage et l'amenée de l'au moins un troisième dispositif de support (1) - éventuellement chargé - avec un dispositif de levage par-dessus le véhicule ferroviaire (2) sous forme d'un wagon-poche, dans lequel le dispositif de levage pour le processus de levage agit sur les au moins deux bords de préhension (5) du dispositif de support (1)
- la disposition et la fixation de l'au moins un troisième dispositif de support (1) - éventuellement chargé - au-dessus de la poche (14) sur les moyens de fixation (15) disposés dans la zone au-dessus des au moins deux longerons (4) du premier dispositif de support (1) pour la réalisation d'un wagon plat
- éventuellement le chargement du deuxième et de l'au moins un troisième dispositif de support (1) - au cas où ceux-ci n'auraient pas déjà été chargés - de préférence par montée du véhicule (3) ou des véhicules sur les wagons plats.
